Europäisches Patentamt

European Patent Office

Office européen des brevets

(11) Publication number: **0 180 066**
A2

## (12) EUROPEAN PATENT APPLICATION

(21) Application number: 85112691.2

(22) Date of filing: 07.10.85

(51) Int. Cl.⁴: **H 04 L 11/16, H 04 L 27/00**

(30) Priority: 02.11.84 US 667864

(43) Date of publication of application: 07.05.86
Bulletin 86/19

(84) Designated Contracting States: BE DE FR GB IT LU NL
SE

(71) Applicant: Universal Data Systems, Inc., 5000 Bradford
Drive, Huntsville Alabama 35805 (US)

(72) Inventor: Burch, Richard A., 176 Dexter Circle, Madison
Alabama 35758 (US)
Inventor: McMahan, Dennis B., 7427 Logan Drive,
Huntsville Alabama 35802 (US)

(74) Representative: EGLI-EUROPEAN PATENT
ATTORNEYS, Widenmayerstrasse 5,
D-8000 München 22 (DE)

(54) Multidrop modem communication system.

(57) A multidrop high-speed modem communication system
having a master and a plurality of remote modems, wherein
an initial long train sequence provides the necessary
modem equalization, wherein subsequent channel commu-
nications are preceded by a short training sequence. The
remote modems, operating as slave modems, include a
transmitter pre-equalizer, wherein the equalizer coef-
ficients for each remote-to-master channel are generated at
the master modem and sent to the remote modems. Upon
subsequent communications, a slave modem reloads the
previous coefficients for its channel into its transmitter
equalilizer. Other modem parameters, such as timing,
phase, and frequency are reestablished by a short fast train
sequence. Thereby, the modems may quickly exchange
data without consuming excessive time in equalizing the
channel for each remote-to-master transmission.

## FIELD OF THE INVENTION

The present invention relates to synchronous modem communication systems, and more particularly to high-speed multidrop polling communication systems.

## BACKGROUND OF THE INVENTION

A frequent embodiment of modem communication systems, called a multidrop polling communication system, combines a single master modem connected to the related data terminal equipment (DTE) and a plurality of remote modems, each having their own DTE. The master modem, under control of the corresponding DTE, will poll the remote DTE through the corresponding remote modems, one at a time. The polling is accomplished by sending an address code which the associated remote DTE will recognize and provide a request to send (RTS) signal to the remote modem, whereupon the remote modem will signal the master modem by returning an acknowledgement signal. Before subsequent data can be exchanged, each modem, typically including internal line equalizer, must be optimized to provide the maximum data flow and minimum signal errors within the exchange of data. This is usually accomplished by preceding the data exchange with a training sequence of predetermined signals and adjusting the modem to maximize the accuracy of those predetermined signals.

A high percentage of the time, the modem system is used for polling of remote systems where the length of the data to be exchanged is rather short. However, the time necessary to equalize and adjust the respective communicating modems often exceeds the length of time of the exchange data itself. Under such conditions, the communication system becomes significantly underused, and inefficient. Further increase in data communication speed requires still further or extended equalization adjustment time periods. As a result, the improvement in modem data transfer speed is reduced by the initial modem training sequence, thereby eliminating the advantage of high–speed modems in many applications.

## SUMMARY OF THE INVENTION

The high–speed multidrop polling communication system according to the present invention provides a communication system including a master modem and a plurality of remote or slave modems having transmit equalizers which pre-equalize the signals transmitted over the data channel. Furthermore, the transmitter pre–equalizers include storage means wherein the coefficients used, once selected during an initial long train start-up sequence, are retained. Thereafter, the slave modems reapply the transmit equalization coefficients associated with the particular channel, together with a short "fast" training sequence for fine adjustment of the communicating modems. The present invention provides for an initial long-train start-up sequence of 2.4 seconds, during which the equalizer coefficients of a remote-to-master channel are acquired by the receiver equalizer of the master modem and sent to the remote modem for use in its transmitter equalizer. Thereafter, the master modem receiver circuits are adjusted by highly shortened 8.1-millisecond fast train sequences which precede all remote-to-master transfers of data.

## BRIEF DESCRIPTION OF THE DRAWING

These and other features of the present invention will be better understood by reading the following detailed description, taken together with the drawing, wherein:

Fig. 1 is a block diagram of a master and remote modem;

Fig. 2 is a block diagram showing the multidrop polling arrangement according to the present invention;

Fig. 3 is a block diagram of the modem according to the present invention;

Fig. 4A is a long train sequence provided to all remote modems on master modem power-up;

Fig. 4B and 4C are representations of the continuation of the long train sequence upon remote DTE RTS; and

Fig. 5 is a timing diagram showing the fast train sequence according to the present invention.

## DETAILED DESCRIPTION OF THE INVENTION

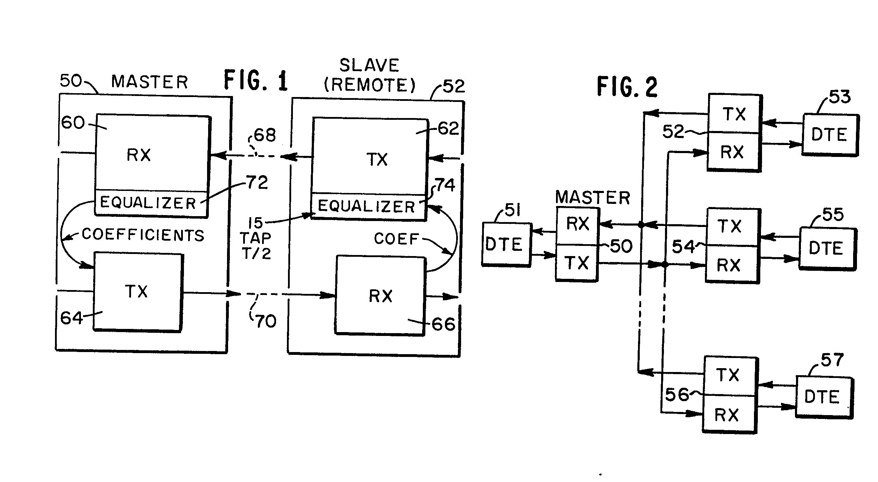

A simplified communication system according to the present invention, comprising a pair of modems, is shown in Fig. 1, wherein a master modem 50 communicates with a remote modem 52. The remote modem 52, operable as a slave modem with respect to a master modem 50, includes a transmitter 62 which communicates with the receiver 60 portion of the master modem 50. Similarly, the master modem transmitter 64 communicates with the slave modem 52 receiver 66 providing a bidirectional transfer of data over a transmission line having paths 68 and 70. Typically the paths 68 and 70 are provided by a bidirectional data channel incorporating quadrature modulation well known in the art and not discussed here.

Before the DTE data is transmitted, the remote transmitter, initially uncompensated or unequalized, transmits a sequence of training signals to the receiver 60 of the master modem 50. The receiver 60 self-synchronizes, and includes an equalizer 72 which self-adjusts over the period of training signals, typically a period of a fraction of a second, the ·adjustment being described by equalizer coefficient and receiver timing values. Subsequently, the coefficient values 72 are transferred to the master modem 50 transmitter 64 and transmitted to the slave modem 52 receiver 66. The coefficients are then loaded into a transmitter equalizer 74, which is operable to pre-equalize the signal transmitted by the transmitter 62. The transmitter 62 of the slave modem 52 incorporates a pre-equalized transmission signal, eliminating the requirement that the master modem 50 receiver equalize the received signal to provide an error-free reception of data. The transmission from the slave modem 52 transmitter 62 is preceded by a short training sequence, wherein the receiver 60 finely readjusts its operating parameters, such as receiver data and carrier timing and phase. Thereafter, the exchange of DTE data commences.

In the preferred multidrop polling implementation according to Fig. 2, the master modem 50 communicates with a plurality of remote modems 52, 54, and 56, operable as slave modems with respect to the master modem 50. Although there is no limitation of number of remote modems possible in the communication network, the present invention envisions a maximum of 99 such remote modems. The master modem 50, as well as each remote modem 52, 54, and 56, each have respective data terminal equipment (DTE) 51, 53, 55, and 57 associated therewith. All modems in the system according to the present invention are under strict control of the respective DTE. The initiation of communication and the response thereto are directed by the respective DTE. In particular, the master DTE typically polls each of the DTEs by transmitting their respective address signal. The master modem 50 then converts the particular address signal into signals received by every remote modem 52, 54, and 56, wherein all associated DTE 53, 55, and 57 receive every address transmitted. Upon reception of its own address, the DTE responds with a request to send (RTS) to the respective modem, which in turn sends an acknowledge signal to the master modem, which is received by the controlling DTE. According to the preferred embodiment of the present invention, the coefficients provided by the master for each remote modem 52, 54, and 56 are received by the particular slave modem and stored in a particular memory location, shown as 74 in Fig. 1. When the slave modem 52 initiates a subsequent communication sequence, the communicating modems need only exchange a short "fast" train signal sequence to provide the necessary master modem receiver fine tuning. Thereafter, exchange of DTE data commences.

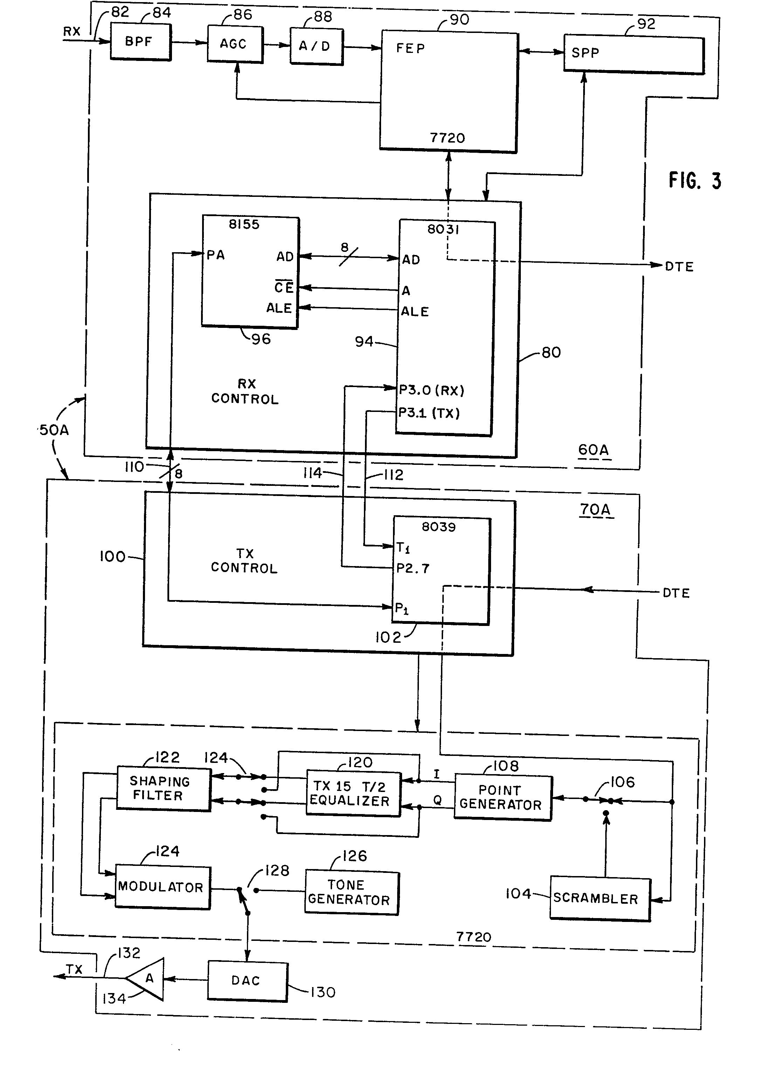

Fig. 3 is a block diagram 50A of either the master modem 50 or one of the slave modems 52, 54, and 56 according to the present invention. The modem receives a signal at the input 82 of bandpass filter 84, which passes the frequencies of interest and rejects signals outside of the desired frequency band. The bandpass filter 84 output signal is received by an automatic gain control circuit 86 which normalizes the received signal to a more or less constant level, which is then digitized by analog-to-digital converter 88. The digitized signal is then received by a front end processor (FEP) 90, which includes apparatus to perform a Hilbert transform of particular received signals, discrete Fourier transforms, carrier detect circuit, and signal demodulation. Moreover, the FEP 90 provides a control signal to the AGC circuit 86 to maintain the signal at a desired amplitude level over varying conditions. A signal processor peripheral (SPP) 92 is connected to the FEP 90 and includes the adaptive equalizer, the phase recovery elements, the decision point generator, and other necessary functions, such as for receiver carrier recovery. The elements for the modem 50A receiver portion 60 described thus far are generally known in the art and not discussed herein. In particular, the FEP 90 and SPP 92 are incorporated by program control of an integrated circuit Part No. 7720, provided by NEC of Japan. The program control for implementation of the above-described functions are well within the skill of one in the communication and modem art and familiar with the Part No. 7720, whose application and reference materials are herein incorporated. The resulting demodulated data signals produced by the FEP 90 are transmitted through the receiver control 80, and in particular a processor 94, and then to the DTE (not shown). The processor 94 arranges the signal bits in a particular serial signal format receivable by the associated DTE.

The receiver control circuit 80 includes the processor 94 and associated RAM and PORT expansion circuit 96, Part No. 8155 of Intel Corporation, Sunnyvale, California, which communicates with the transmit control 100 of the modem 50A transmit circuit 70A. As described above, the receiver equalizer, contained within the FEP 92, provides an equalizer function having a number of associated equalizer coefficients. The coefficients are received by the controller processor 94 of a master modem and transferred to the PORT expander circuit 96 for transfer to the transmit control 100 processor 102. The transfer of the equalizer coefficients, in an eight-bit format, is provided over leads 110 for subsequent transfer. The coefficients comprise a sequence of path weights for a 15-tap T/2 equalizer. In addition to the coefficient values, the received control circuit 80, and in particular the processor 94, sends signals to the transmit control processor 102, which directs the subsequent transfer and implementation of the coefficients according to vectored interrupts to direct subsequent processing of the data in the processor 102, the operation of interrupt service routines or programs being well known in the microprocessor art. The coefficients are stored for subsequent further use. The operation of stored coefficients is provided in more detail in patent application Serial No. 582,453, entitled "Modem Equalizer Training Using Previously Stored Parameters," incorporated herein by reference. When the modem is operable as a master modem, the master receiver equalizer coefficients may be sent as data to a slave modem, once obtained within the master modem transmit circuit 100, as a phase of the long-train sequence described below. Alternately, when operable as a remote or slave modem when received as data by the receive circuit 80, the master receiver equalizer coefficients are again transferred by vectored interrupts to the slave modem transmit circuit 100 for implementation in the transmit equalizer 120. For efficient and rapid communication between the receive and transmit circuits 80 and 100, respectively, it is necessary that the transfer of coefficients on leads 110 and vector signals be provided virtually simultaneously. The vector signals transmitted on lead 112 have a predetermined sequence of pulses from the transmitter port P3.1 (to the timer input) of the transmit control processor 102 concurrent with the transmission of coefficient values on leads 110. The timer input, implemented within Intel 8039 processor circuit, increments a counter, whose value provides the interrupt vector for subsequent processor 102 transfer of the coefficients on leads 110. The operation and instruction manuals of the processor 94 and 102, as well as the port expander circuit 96 Part No. 8155, are incorporated by reference. Upon receipt of the vector signals, the transmit control processor 102 returns an acknowledge signal on lead 114 to the receive control processor 94.

The transmit control processor 102 receives the data from the corresponding DTE (not shown) and transfers the data in modified form to a subsequent digital processor to provide the necessary transmit functions now described, and comprises Part No. 7720 of NEC, Japan.

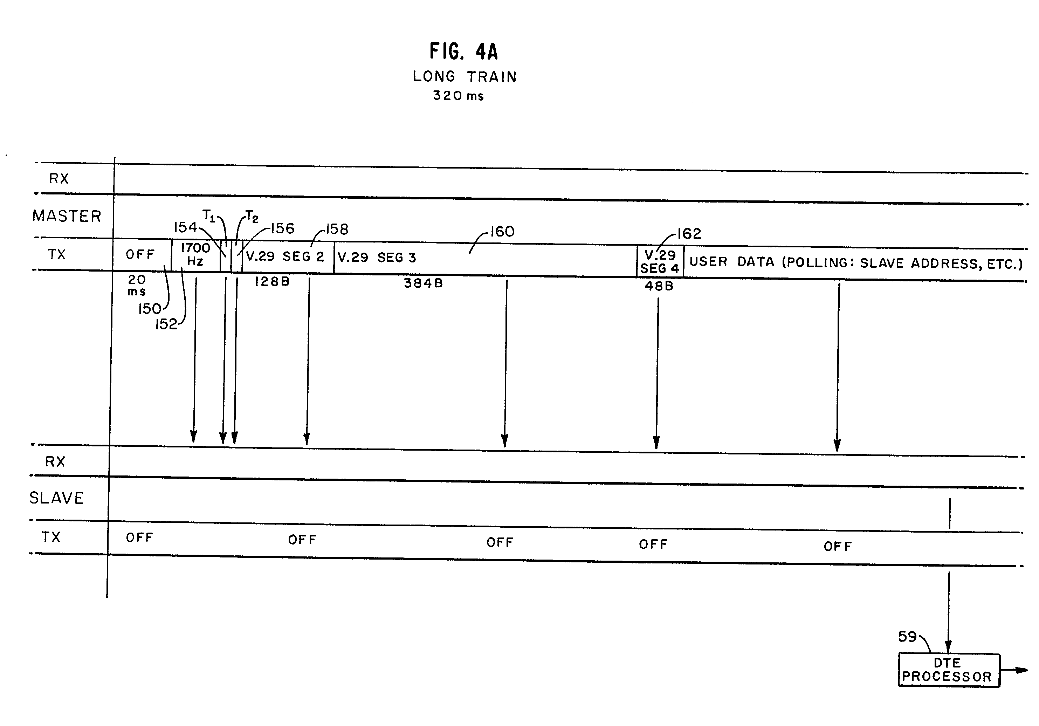

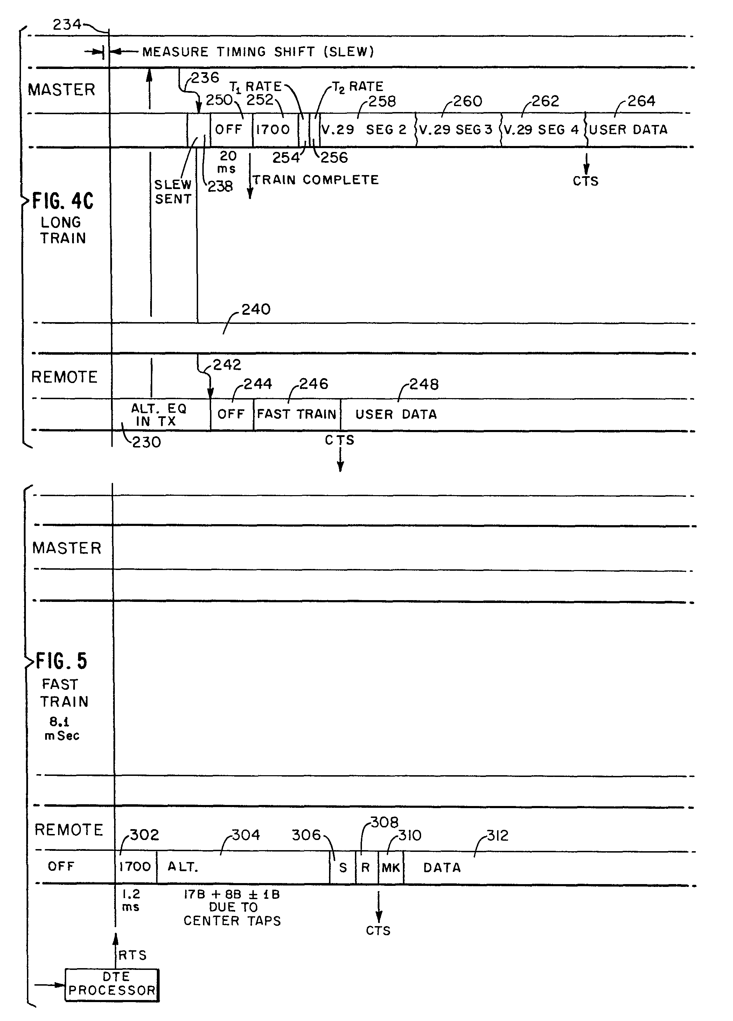

The data signal is received selectively through a data scrambler 104 according to operation of selector switch 106, wherein the scrambler 104 provides encoding according to a predetermined pseudorandom number sequence, well known in the art. The signal is received by a point generator 108 to provide a constellation of data points having corresponding unique phase and amplitude characteristics described by I and Q signal values. The particular point generated is determined to correspond to the value of the signals to be transmitted, including the training sequence and the plurality of data bits from the associated DTE. The I and Q signals produced by the point generator are selectively received by a shaping filter 122 according to operation of a switch 124 to include the equalizer 120, depending on the particular operational sequence step then in progress, discussed below with regard to Fig. 4A-4C and Fig. 5. Resulting signals from the shaping fil·er 122 are received by a signal modulator 124 providing the particular quadrature modulation for transmission to the external equipment. However, a tone generator 126 is selectively provided according to operation switch 128 for intermodem signalling, discussed below. The signals from either the modulator 124 or the tone generator 126 are then converted to analog form by a digital-to-analog converter 130 and then coupled to the transmission path on lead 132 by an amplifier 134 for proper signal level and isolation.

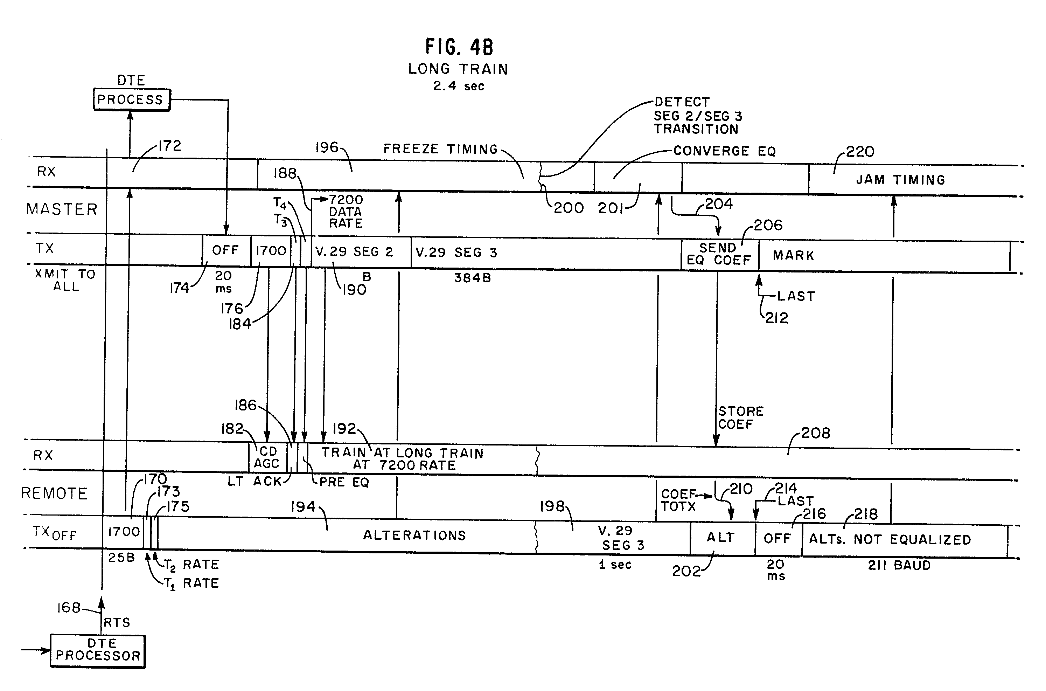

A typical long train sequence is shown in Figs. 4B and 4C. A preliminary long train sequence is shown in Fig. 4A, which occurs when the master modem is first turned on. The sequence of Fig. 4A commences with a 20-millisecond silient or off period 150 followed by a signal tone of 1700 Hz at period 152, corresponding to the selection of the tone generator 106 in Fig. 3. Thereafter, first and second tones $T_1$ and $T_2$ are transmitted at 154 and 156, followed by a sequence of 128 baud of signals conforming to the CCITT specification V.29, Segment 2, at 158. Thereafter, for a period of 384 baud, a sequence of V.29, Segment 3 signals is transmitted to the receiving remote slave receiver(s) during period 160. Thereafter, a sequence of CCITT V.29, Segement 4 signals of 48 baud in duration is transmitted during the period 162. This sequence of signals of Fig. 4A, including intervals 150 through 162, is provided by the master modem to all remote slave modems then connected and turned on when the master modem is initially turned on. Thereafter, the user data, comprising polling addresses of the corresponding remote DTE is sent to all receiving modems, such as slave modems 52, 54, and 56 of Fig. 2.

Upon activation of a particularly addressed DTE such as DTE 59, a request to send signal is generated and causes the remote transmitter to begin a 25-baud duration of 1700 Hz tone at 170 in Fig. 4B, which when received by the master modem receiver at 172, disables circuits to the DTE, and the master modem responds by an initial off period of 20 milliseconds followed by a 1700 Hz signal at 174 and 176, respectively. The 1700 Hz signal is received by the remote slave modem at 178, wherein the remote receiver detects carrier and adjusts signal level by activation of the AGC circuit. The remote slave modem transmits tones $T_1$ and $T_2$ to the master modem at 173 and 175 to indicate the desired rate of signal transmission, and to indicate that a long train sequence is desired.

The master modem provides a long train acknowledge tone $T_3$ at interval 184, which is received by the remote modem receiver at 186. Thereafter, the master modem reduces signal transmission rate to a 7200-bps data rate, at 188. Subsequently, the master modem begins a V.29, Segment 2 sequence of 896-baud duration at 190, which is used to train the remote slave receiver modem equalizer at interval 192. Meanwhile, the remote slave modem has been transmitting alternations which comprise a sequence of alternating signals having a constant frequency and alternating phase, during interval 194, which is received by the master modem receiver at interval 196 to acquire frequency offset.

After an approximately 800-baud duration of alternations at 194, the remote modem provides a sequence of V.29, Segment 3 signals of approximately one-second duration at 198. The master modem receiver detects the transition between Segment 2 and Segment 3 at 200, and thereafter (at 201) converges the master modem receiver equalizer coefficients during the transmission of V.29, Segment 3 signals during interval 198. The remote modem transmitter thereafter begins the alternation signal sequence at 202. The master modem then transfers its receive equalizer coefficients to its transmitter circuit at 204, and begins to send the coefficients at 206 to the remote modem receiver at 208. The coefficients are transferred to the remote modem receiver circuit at 210 during the sequence of signal alterations at 202. When the last coefficients are transmitted at 212 and accurately received at 214, the remote modem signals the master modem by a 20-m llisecond silent period, followed by a sequence of alternations of 211-baud duration, which is used by the master modem receiver to provide a coarse synchronization of receiver timing at 220.

Continuing on at Fig. 4C, the remote modem receive circuit transfers the coefficients by vector interrupt to its transmit circuit for incorporation into its transmitter equalizer during the interval 230 beginning at period 234, producing pre-equalized alternations output from the remote transmitter. The master modem receiver measures a change in receiver timing or the timing shift (slew) at 234. The resulting timing measurement is transferred to the master modem transmitter at 236, and transmitted during interval 238 to the remote modem receiver at 240, which is in turn transferred to the remote modem transmit equalizer at time 242. Thereafter, the remote modem transmitter begins an off period at 244 of 20 milliseconds, followed by a fast train sequence at 246, discussed below. Thereafter, the user data is transmitted from the remote modem to the master modem during period 248.

After the master modem transmits the slew data at interval 238, it begins a 20-millisecond quiet period at 250, followed by a 1700 Hz tone at 252, indicating that the training is complete. Thereafter, the master modem transmits a first and second tone at 254 and 256, to signal the remote modem of the rate at which data will be subsequently transmitted. Thereafter, during interval 258, 260, and 262, a sequence of intervals comprising the CCITT V.29, Segment 2, Segment 3, and Segment 4 signals are transmitted. Thereafter, at 264, the user data may be transmitted from the master to the remote modem.

After the transmitter coefficients have been established for a particular remote modem, subsequent transfer of data may not require the long train sequence. In such case, a 1700 Hz signal of 3.3-millisecond duration is transmitted to the master modem at interval 302, followed by a sequence of alernating signals of $25\pm1$ baud duration. Thereafter, a synchronizing signal of predetermined nature is transmitted, followed by a signal indicating a subsequent data rate transmitted at periods 306 and 308, respectively. Thereafter, at 310, a mark signal is transmitted followed by the data from the remote to the master modem at 312.

The present invention is not limited by the above solely exemplary detailed description. Modifications and substitutions by those skilled in the art are considered within the scope of the present invention. Therefore, the present invention is not to be considered limited, except by the following claims.

35

- 12 -

# C L A I M S

1. A method of establishing a communications channel between a master modem and one of a plurality of remote modems and associated data terminal equipment, comprising the steps of:

transmitting an address from the master corresponding to one of the data terminal equipment of the respective remote modems to said plurality of remote modems;

receiving said address by each said remote modem;

identifying said address by the data terminal equipment having said address wherein a request to send signal is generated;

transmitting an acknowledgement signal from one of said plurality of remote modems according to request to send signal;

receiving said acknowledgement by said master modem;

selectively transmitting a long train sequence from said remote modem;

receiving said long train sequence at the master modem receiving the request to send signal;

adjusting the equalizer coefficients at said master modem;

transmitting said equalizer coefficient from said master modem to said remote modem;

receiving said coefficients from said master modem by said remote modem;

storing said equalizer coefficients in said remote modem;

equalizing the subsequently transmitted signals from the remote modem; and

transmitting a data flow between said master and remote modems.

2. The method of claim 1, wherein

said step of selectively transmitting a long train sequence includes the step of

detecting a long train request signal.

3. The method of claim 2, wherein

said step of detecting a long train request signal comprises receiving a long train request tone.

4. The method of claim 1, further comprising the steps of:

terminating the data flow;

polling the remote modems by said master modem, wherein the address corresponding to a previously addressed data terminal equipment is transmitted;

receiving said address by said data terminal equipment;

identifying said address by said data terminal equipment, causing a request to send signal to be generated;

transmitting an acknowledgement signal from the master modem corresponding to the modem receiving said request to send signal;

receiving said acknowledge signal;

selectively transmitting a short train sequence from said remote;

receiving said short train sequence at the master modem;

adjusting the receiver of the master modem; and

commencing the exchange of data between the master and remote modem.

5. The method of claim 4, wherein

said step of selectively transmitting a short train sequence comprises the step of

detecting a short train request signal.

6.    The method of claim 5, wherein

said step of detecting a short train request signal comprises receiving a short train request tone.

7.    A multidrop modem communication system, comprising:

a bidirectional communication line;

a master modem, including:

a receiver having an equalizer therein and having characteristics represented by corresponding equalizer coefficients; and

a transmitter having means to transmit said master receiver equalizer coefficients; and

at least one remote modem, including:

a transmitter connected to communicate with said master modem receiver over said communication lines, including a transmit equalizer; and

a receiver connected to communicate with said master modem receiver over said communication lines including means to adjust said transmit equalizer according to said received equalizer cofficient;

wherein additional remote receiver parameters are locally acquired thereafter.

8.    The multidrop modem communication system of claim 7, wherein

at least one of said master modem and remote modem includes timing training means including at least one of:

means for generating a long train sequence; and

means for generating a short train sequence.

9.    The multidrop modem communication system of claim 8, wherein at least one other of said master modem and remote modem includes:

sequence request means providing a signal to the corresponding one of said long train and short train; and

means for selectively receiving said long train and said short train sequence.

10.    The multidrop modem communication system of claim 9, wherein said long train sequence is initially selected wherein the equalizer coefficients are selected, the respective said modem in communication therewith further including means to store said coefficients and being operable to store said coefficients after said long train sequence, wherein

said coefficients are reapplied for subsequent communications between respective modems for which said short train sequence is requested and thereafter generated.

11.    A microprocessor controlled modem comprising:

a first microprocessor having a data port signal and a counter output and respectively providing data and a serial vector output therefrom;

a second microprocessor having a data port for receiving data therein, a counter having a counter input, and a vector interrupt means wherein said received data is selectively processed by said second microprocessor;

first means for transferring data between said data ports of said first and said second microprocessors; and

second means for transferring said serial vector output signal from said first microprocessor counter output to said second microprocessor counter input, wherein

said second microprocessor vector interrupt means is operable according to the state of said counter to process said data received from said first microprocessor according to the serial vector output provided by said first microprocessor.

12. The microprocessor controlled modem of claim 11, wherein

said second microprocessor receives said data and said serial pulse output signal simultaneously.

13. The microprocessor controlled modem of claim 11, further including means to provide an acknowledge signal connected to said first microprocessor and said second microprocessor, wherein an acknowledge signal is provided after receipt of said serial vector signal by said second microprocessor.

14. The microprocessor controlled modem of claim 10, further including

a modem receiver connected to said first microprocessor; and

a modem transmitter connected to said second microprocessor.

15. The microprocessor controlled modem of claim 14 wherein

said modem receiver includes an equalizer and is operable to provide selectable equalizer coefficients;

said first microprocessor is adapted to transfer said equalizer coefficients as data wherein said data is identified according to said serial vector output signals; and

said second microprocessor is adapted to transfer said data to said transmitter for transmission.

16.    The microprocessor controlled modem of claim 13, wherein

said modem receiver is operable to receive selectable equalizer coefficients;

said first microprocessor is adapted to transfer said equalizer coefficients to said second microprocessor as data, wherein said data is identified according to said serial vector output signals,

said transmitter includes an adjustable equalizer; and

said second microprocessor is adapted to adjust said transmitter and said equalizer according to said received equalizer coefficients.

FIG. 1

50 — MASTER
SLAVE (REMOTE) — 52

60 — RX
68
62 — TX

72 — EQUALIZER
74 — EQUALIZER
15 TAP T/2

COEFFICIENTS
COEF

64 — TX
70
66 — RX

FIG. 2

53 — DTE
TX
52
RX

51 — DTE
MASTER
RX
50
TX
54
TX — 55 DTE
RX

56
TX — 57 DTE
RX

1/5

0180066

0180066

FIG. 3

# FIG. 4A
## LONG TRAIN
### 320 ms

3/5

0180066

FIG. 4B
LONG TRAIN
2.4 sec

0180066

## FIG. 4C
### LONG TRAIN

234

MEASURE TIMING SHIFT (SLEW)

**MASTER**

236

$T_1$ RATE — 250, 252 — $T_2$ RATE — 258 — 260 — 262 — 264

| OFF | 1700 | V.29 SEG 2 | V.29 SEG 3 | V.29 SEG 4 | USER DATA |

20 ms — 238   254   256

SLEW SENT

TRAIN COMPLETE

CTS

240

**REMOTE**

242   244   246   248

| ALT. EQ IN TX | OFF | FAST TRAIN | USER DATA |

230

CTS

## FIG. 5
### FAST TRAIN 8.1 mSec

**MASTER**

**REMOTE**

302   304   306   308, 310   312

| OFF | 1700 | ALT. | S | R | MK | DATA |

1.2 ms   17B + 8B ± 1B DUE TO CENTER TAPS

CTS

RTS

DTE PROCESSOR